# EUROPEAN PATENT APPLICATION

(11) **EP 2 829 561 A1**
(43) Date of publication of application: **28.01.2015**
(21) Application number: 13306070.7
(22) Date of filing: 24.07.2013
(51) Int. Cl.: C08G 18/48, C08G 18/76, C08G 18/38, C08G 18/10

(54) **Self-healing polymers**

(71) Applicant: Centre National de la Recherche Scientifique, 75016 Paris (FR); Université de Strasbourg, 67000 Strasbourg (FR)
(72) Inventor: Lehn, Jean Marie, 67000 STRASBOURG (FR); Roy, Nabarun, 700106 KOLKATA (IN)
(74) Representative: Blot, Philippe Robert Emile

(57) **Abstract**

The invention relates to a compound including the following structure: 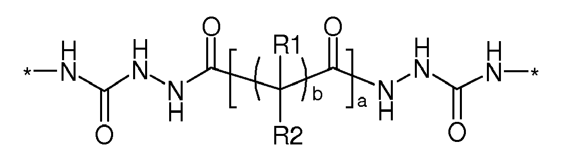 wherein R1 and R2 are each independently selected from hydrogen and a C1-C6 alkyl, for example methyl and ethyl,
wherein a is 1-10,
wherein b is a number from 1 to 20,
* represents a covalent bond to an atom or group of atoms.

The invention relates to polymers comprising said structure (I) as monomer.

The invention more specifically relates to self-healing polymers. More particularly, the present invention relates to the synthesis of self-healing polymer films

## Description

The present invention relates to self-healing polymers. More particularly, the present invention relates to the synthesis of self-healing polymer films.

### BACKGROUND OF THE INVENTION

Dynamic materials capable of component exchange and recombination offer great potential for the generation of novel properties, mechanical, optical, electrical etc. on both the molecular and supramolecular levels. One of the salient features that distinguish animate entities from inanimate ones is their ability to spontaneously heal against damage or injury inflicted upon them. With the advent of interdisciplinary research incorporating biological aspects into synthetic materials, much research interest is vested into the search for materials presenting in particular such self-healing features. Dynamic covalent chemistry and supramolecular chemistry give powerful access to the development of adaptive functional materials, in particular dynamic polymers (dynamers) of either supramolecular or molecular types. One may distinguish materials capable of undergoing either supramolecular/non-covalent self-healing, implementing non-covalent interactions, or molecular/covalent self-healing, based on reversible chemical reactions, or both combined within the same structure. On a general note, self-healing materials described so far, can be categorized into three broad classes namely vascular, capsule based and intrinsic self-healing materials.

Intrinsic self-healing materials are specially coveted ones, which make use of reversible chemical reactions, for triggering and performing the healing process. In specific cases an external stimulus or a catalyst may be necessary to initiate it. In the recent past, several methodologies have been explored towards the formation of materials conducive to spontaneous healing. Covalent dynamics have been implemented based on reversible Diels-Alder reactions for the formation of self-healing covalent polymers. Non-covalent interactions such as hydrogen bonding have been widely implemented in the investigation of supramolecular dynamers based on various H-bonding motifs. They offer a direct pathway for introducing intrinsic self-healing features into materials, so that an increase in the number of H bonds within a molecular framework would enhance the chance of autonomic healing. One of the major advantages of systems based on non-covalent interactions is their ability to undergo self-repairing without the addition of any external agent.

Materials of supramolecular nature have attracted much attention owing to the interesting features (such as self-reparability and material robustness) that are imparted by non-covalent interactions to synthetic materials. Among the various structures and synthetic methodologies that may be considered for this purpose, the introduction of extensive arrays of multiple hydrogen bonds allows for the formation of supramolecular polymers, that may in principle present self-healing behavior. Hydrogen bonded networks implement dynamic non-covalent interactions. Suitable selection of structural units gives access to novel dynamic self-repairing materials by incrementing the number of hydrogen bonding sites present within a molecular framework. However the proper design of molecule structures is not easy and getting polymers with self-healing properties is still a challenge.

The synthesis of polyurethan plastics utilizing isocyanate derivatives with polyhydroxy compounds is known to form fibers, foils or coatings. It has also been known utilizing hydrazides and monomeric isocyanates for the synthesis of fibers, foils and coatings (US 3,202,636, US 3,432,456). However, it had never been utilized for the investigation of self-healing property.

### AIMS OF THE INVENTION

The invention aims to provide self-healing polymers.

One goal of this invention is to devise a simple route for the synthesis of self-healing polymers, in particular polymers films, based on systems incorporating extensive hydrogen bonding motifs. The invention aims to provide polymers or compounds undergoing self-healing at a damaged surface. Typically a damaged surface is obtained by mechanically cutting a polymer film into two pieces.

The invention also more specifically aims to provide transparent polymer films.

The invention also more specifically aims to provide elastic polymer films.

The present invention aims to provide an industrial route for manufacturing said polymers.

### SUMMARY OF THE INVENTION

The invention is related to self-healing polymers. Polycondensation between a commercially available diisocyanate derivative and a bis-hydrazide (or dihydrazide) yielded polymeric material which may be produced as film. These self-healing transparent polymers could find applications in paint and coating industries, as well as in making robust polymeric materials, which would self-heal upon damage. The autonomous self-healing property of the film is surprising and of particular interest.

The transparent nature of the film is even more surprising and of particular interest.

It is also very interesting that polymers of the invention may be soft polymeric materials. Soft polymers are notably defined such as in Elasticity of Soft Polymers - Constant-Stress Elongation Tests; C. A. Dahlquist, J. O. Hendricks , N. W. Taylor ; Ind. Eng. Chem., 1951, 43 (6), pp 1404-1410. It is clearly unexpected that polymers of the present invention exhibit self-healing properties together with elastic properties. Other polymers prepared by the inventors, which do not satisfy formula (I) of the invention were hard but not soft polymers (see: The Tris-Urea Motif and Its Incorporation into Polydimethylsiloxane-Based Supramolecular Materials Presenting Self-Healing Features, Dr. Nabarun Roy,Prof. Eric Buhler, Prof. Jean-Marie Lehn, 2013, DOI: 10.1002/chem.201203518). It was also expected by the present inventors that the modification of the basic tris-urea function of these hard polymers would (negatively) critically affects self-healing properties because the specific arrangement of the basic tris-urea motif was deemed responsible for self-healing properties. The present invention is surprising.

### DETAILED DESCRIPTION OF THE INVENTION

In particular the invention relates to compounds comprising a urea-amid hydrogen bonding motif for use as self-healing agent.

A seal-healing agent is capable of repairing itself in its intrinsic environment as soon as damage occurs. Such damage is for example a cut, a break at the surface or interior of a material. Self-healing agents may prevent or stop the propagation of damage and extend the lifetime of the repaired material. Said material can be already made by said self-healing compound or can be material to which said self-healing compound is or has been added.

The invention relates to compounds including the following structure: 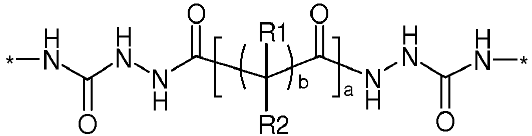 wherein R1 and R2 are each independently selected from hydrogen and a C1-C6 alkyl, for example methyl and ethyl,
wherein a is 1-10,
wherein b is a number from 1 to 20,
* represents a covalent bond to an atom or group of atoms.

The invention also relates to polymers comprising as a monomer the structure (I) below: 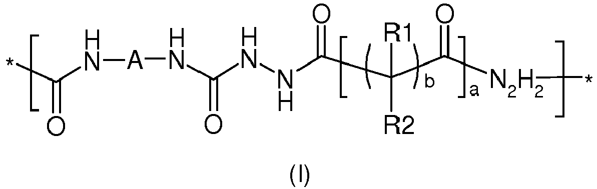 wherein A comprises a polymer,
wherein R1 and R2 are each independently selected from hydrogen and a C1-C6 alkyl, for example methyl and ethyl,
wherein a is 1-10,
wherein b is a number from 1 to 20.

The invention relates to copolymers including one or more types of monomers of structure (I), including any embodiments and variants thereof, including preferred structures thereof, notably as defined below. Copolymers may be alternating copolymers possessing regularly alternating monomer residues, periodic copolymers having monomer residue types arranged in a repeating sequence, statistical copolymers having monomer residues arranged according to a statistical rule (random copolymers), block copolymers having two or more homopolymer subunits linked by covalent bonds, polymers with two, three or more blocks of distinct chemical species, also called diblock, triblock or multiblock copolymers, respectively, and graft or grafted copolymers, containing side chains that have a different composition or configuration than the main polymeric chain.

According to a specific embodiment, the invention relates to compounds or polymers comprising the structure (I) below: 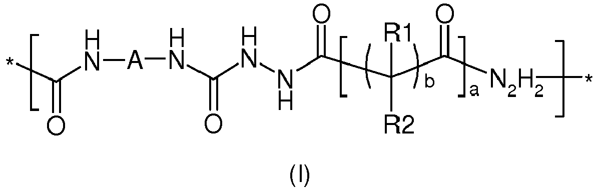 wherein
A comprises a polymer,
R1 and R2 are each independently selected from hydrogen and a C1-C6 alkyl, for example methyl and ethyl,
a is 1 to 10,
b is a number from 1 to 20,
said polymer unit of A is a polysiloxane or a polyether,
said polyether comprises terminal phenyl groups.

According to a specific embodiment said polymer comprises as monomer a structure of formula (I).

According to one embodiment, "A" comprises a polymer structure selected from: 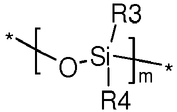 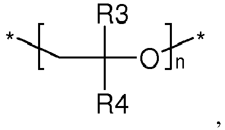 and mixture thereof,
wherein
n is a number from 5 to 200, m is a number of from 5 to 200, and
R3 and R4 are each independently hydrogen or a C1-C6 alkyl, for example methyl or ethyl.

Advantageously, "A" is defined as : 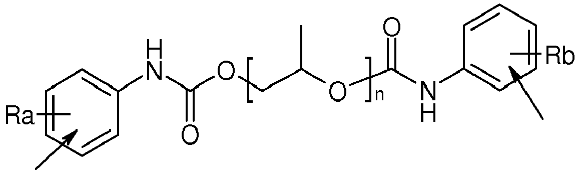 wherein arrows define the points of attachment of "A" into structure (I), without particular position on the phenyl group, Ra and Rb are independently 1, 2, 3 or 4 same or distinct substituents of said phenyl groups, each independently selected from the group consisting of halogen (Br, Cl, F or I), OR²², NR²³R²⁴, NHOH, NO₂, CN, CF₃, C₁-C₆ alkyl, C₂-C₆ alcenyl, C₂-C₆ alcynyl, C₆-C₁₀ aryl, C(=O)R²², CO₂R²², OC(=O)R²², C(=O)NR²³R²⁴, OC(=O)NR²³R²⁴, NR²¹C(=S)R²² or S(O)_{y}R²² ; R²² is, at each occurrence, independently selected among H, C₁-C₆ alkyl; R²³ and R²⁴ are, at each occurrence, independently selected among H, C₁-C₆ alkyl, or R²³ and R²⁴ form together a heterocyclic group having from 3 to 7 atoms.

Preferably, "A" is defined as: 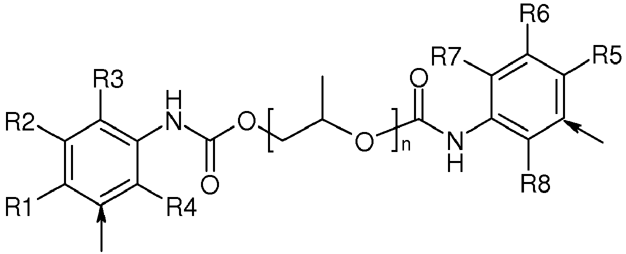 wherein R1, R2, R3, R4, R5, R6, R7, and R8 are each independently selected from the group consisting of halogen (Br, Cl, F or I), OR²², NR²³R²⁴, NHOH, NO₂ CN, CF₃, C₁-C₆ alkyl, C₂-C₆ alcenyl, C₂-C₆ alcynyl, C₆-C₁₀ aryl, C(=O)R²², CO₂R²², OC(=O)R²², C(=O)NR²³R²⁴, OC(=O)NR²³R²⁴, NR²¹C(=S)R²² or S(O)_{y}R²² ; R²² is, at each occurrence, independently selected among H, C₁-C₆ alkyl; R²³ and R²⁴ are, at each occurrence, independently selected among H, C₁-C₆ alkyl, or R²³ and R²⁴ form together a heterocyclic group having from 3 to 7 atoms,
wherein arrows define the points of attachment of "A" into structure.

The invention also covers compounds or polymers, wherein A is defined as: 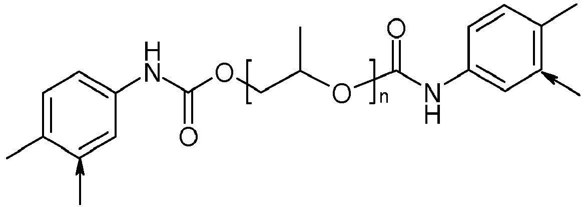 wherein arrows define the points of attachment of "A" into structure.

The invention also covers compounds or polymers, wherein A is defined as: 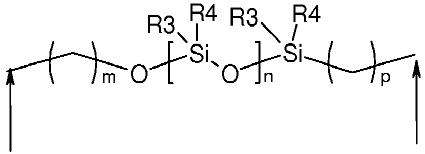 wherein
R3 and R4 are each independently hydrogen and a C1-C6 alkyl, for example methyl and ethyl,
m and p are each independently a number from 1 to 20,
n is a number from 5 to 200, arrows define the points of attachment of "A" into the structure.

According to a particular embodiment, m and p are each independently a number from 1 to 10, preferably from 1 to 5, for example 3. According to a particular embodiment, n is a number from 5 to 200, preferably from 10 to 100.

According to a particular embodiment, "A" comprises a polymer unit and presents a molecular weight (Mw) of from 500 to 50,000 g/mol.

According to a particular embodiment, "A" is a straight or branched alkyl chain optionally containing one or more heteroatoms selected from N, O, S, and Si, and/or optionally containing one or more aromatic rings.

According to a specific embodiment, the invention relates to dynamic supramolecular polymers obtained by polycondensation of dihydrazide with a bis-isocyanate component derived from polysiloxane chains or from polyether chain, wherein said polyether chains contain preferably terminal phenyl groups.

The invention also relates to a basic polymers motif described in the invention for forming supramolecular dynamers of PDMS-type (such as PDMS described in D. Tyagi, I. Yilgör, J. E. McGrath, G. L. Wilkes, Polymer 1984, 25, 1807-1816; or in O. Colombani, C. Barioz, L. Bouteiller, C. Chanéac, L. Fompérie, F. Lortie, H. Montès, Macromolecules 2005, 38, 1752-1759) as well as the self-healing behavior of these dynamic polymers. According to one particular embodiment, "A" is a unit comprising a polysiloxane. Such polysiloxane is selected from the group consisting of polydimethylsiloxane (PDMS). Different length of polysiloxane type polymers can be prepared.

According to another particular embodiment, "A" is a unit comprising a polyether. Polyalkylene ethers may be used. Examples are the reaction product of polyhydric alcohols with alkylene oxides (such as, ethylene oxide, propylene oxide, butylene oxide or amylene oxide). The polyhydric polyalkylene ethers may have either primary or secondary hydroxyl groups and preferably are polyhydric polyalkylene ethers prepared from alkylene oxides having from two to five carbon atoms such as polyethylene ether glycols, polypropylene ether glycols and polybutylene ether glycols. The polyhydric polyalkylene ethers may be prepared by any known process such as, for example, the process disclosed by Wurtz in 1859, and in Encyclopedia of Chemical Technology, Vol 7, pp 257-262, published by Interscience Publishers, Inc (1951) or in US Patent n°1,922,459.

Such polyether is selected from the group consisting of polyalkylene glycols, in particular polyethylene glycol and polypropylene glycol.

According to one embodiment, "A" comprises a polymer unit and presents a molecular weight (Mw) of from 500 to 5,000 g/mol. In a more specific embodiment "A" presents a molecular weight (Mw) of from 1,000 to 3,000 g/mol.

According to another embodiment, "A" comprises a polymer unit and presents a molecular weight (Mw) of from 5,000 to 50,000 g/mol. In a more specific embodiment "A" presents a molecular weight (Mw) of from 6,000 to 30,000 g/mol.

In a particular embodiment, "A" comprises terminal aromatic groups each linked to one isocyanate. In a particular embodiment, such aromatic groups are phenyl groups, optionally bearing one or more substituents. Substituents are not particularly limited but may be especially defined and selected from the group consisting of halogen (Br, Cl, F or I), OR²², NR²³R²⁴, NHOH, NO₂ CN, CF₃, C,-C₆ alkyl, C₂-C₆ alcenyl, C₂-C₆ alcynyl, C₆-C₁₀ aryl, C(=O)R²², CO₂R²², OC(=O)R²², C(-O)NR²³R²⁴ OC(=O)NR²³R²⁴, NR²¹C(=S)R²² or S(O)_{y}R²² ; R²² is, at each occurrence, independently selected among H, C₁-C₆ alkyl; R²³ and R²⁴ are, at each occurrence, independently selected among H, C₁-C₆ alkyl, or R²³ and R²⁴ form together a heterocyclic group having from 3 to 7 atoms.

In particular, R1, R2, R3, R4, R5, R6, R7, and R8 are each independently selected from hydrogen, methyl and ethyl.

In one embodiment R1, R2, R3, R4, R5, R6, R7, and R8 represent each a hydrogen atom.

In another embodiment, R1 and R5 are methyl, R2, R3, R4, R6, R7, and R8 are each a hydrogen atom.

The invention also relates to a material, notably a polymeric material.

The present invention also relates to the synthesis of the motif according to scheme 1 above. This synthesis is easily realized by the reaction of dihydrazide with at least one isocyanate derivative. The generation of dynamic supramolecular polymers has been achieved by polycondensation of at least one dihydrazide with at least one bis-isocyanate components derived from polysiloxane, in particular poly-dimethylsiloxane (PDMS), or polyether chains.

Among polyethers, one specific embodiment relates to polypropylene glycol.

The invention also relates to a method for preparing a polymer of the invention, said method comprising the condensation of (i) at least one diisocyanate compound and (ii) at least one dihydrazide monomer according to the scheme below: 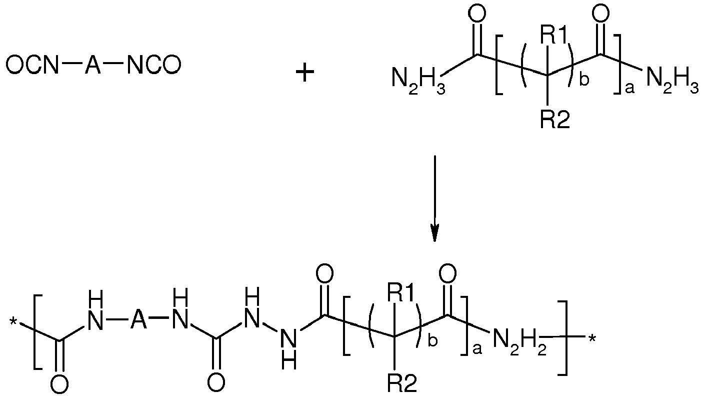 wherein A, R1, R2, a, b, and * are as defined in the present invention.

According to a particular embodiment, said method comprises condensing said diisocyanate and dihydrazide in a solution of organic solvent and drying the solution.

In one embodiment the diisocyanate compound has a linear chain including terminal phenyl groups each bearing at least one isocyanate group, said linear chain optionally bearing lateral substituents as defined in the present invention, and preferably methyl groups or halogen atoms.

Mixtures of diisocyanate compounds can be used.

According to one embodiment, b is at least equal to 2 and (CR1 R2)b may contain unsaturations (C=C).

Polycarboxylic acids which may be used as hydrazide backbone (CO)-(CR1 R2)b-(CO) are for example, oxalic acid, malonic acid, succinic acid, glutaric acid, adipic acid, pimelic acid, ricinoleic acid, suberic acid, azalaic acid, sebacic acid, brassylic acid, thapsic acid, maleic acid, fumaric acid, glutaconic acid, hydromuconic acid, hydromuconic acid, 3-butyl-3-ethylpentanedioic acid, 7-3-diethyl succinic acid, dimeric or higher polymeric polycarboxylic acids notably prepared by the polymerisation of unsaturated fatty acids, unsaturated fatty acids, hydroxycarboxylic acids. According to one embodiment polycarboxylic acids are linear dicarboxylic acids.

One specific embodiment relates to compounds or polymers wherein a is 1 and b is a number from 1 to 20, notably from 1 to 12. One specific embodiment relates to compounds or polymers wherein a is 1 and b is a number from 4 to 20. Advantageously, (CO)-(CR1 R2)b-(CO) represents a succinic, adipic, pimelic, sebacic or suberic backbone. Such (CO)-(CR1 R2)b-(CO) backbone may be obtained by reaction of dicarboxylic acid and dihydrazide compounds.

In one embodiment the dihydrazide compound has a linear chain.

Mixtures of dihydrazide compounds can be used.

Said organic solvent may be a mixture of organic solvents. Suitable organic solvents are those in which the starting materials and the polymer are soluble. Such solvents are alcohol, such as ethanol, chloroform, and mixtures thereof.

According to a particular embodiment, polycondensation may be performed at room temperature (20-25°C) under atmospheric pressure (101325Pa).

According to one embodiment polycondensation is performed under inert atmosphere, such as nitrogen.

Said reaction is preferably performed under stirring.

The reactants diisocyanate and bis-hydrazides are typicallymixed in stoichiometric ratio of 2:1 to 1:2, generally of 1:1.

Drying according to step (ii) may be a vacuum drying. Drying may last several hours, for example 5 to 24 hours, at a temperature which does not degrade the polymer. A temperature may be of 40- 80°C. For drying is a vacuum drying of the polymer solution for 12 hours at 68°C.

The method may comprise a step (iii) of forming a film. The film formation was achieved by re-dissolving the residue obtained after solvent evaporation of the reaction mixture in minimum volume of chloroform. Followed by that the chloroform solution was poured onto a petri dish (of 50 mm diameter) made of fluoroplastic. Nitrogen gas was passed over the petri dish containing the chloroform solution of the polymer for 6 hours, whereupon almost all the chloroform had been evaporated off. The almost dried petri dish was then kept in a vacuum oven for another 12 hours at 68 °C to get rid of last traces of chloroform. After vacuum drying, the petri dish was allowed to cool down to room temperature and thin strips of polymer films.

In general, the thickness of the film is, for example of between 0.1 µm and 1mm, preferably between 0.1 and 200µm.

The invention relates to the use of at least one compound or polymer or material of the invention as self-healing agent. Compounds, polymers and materials of the invention underwent self-repairing at a damaged surface or part. Such damage would mainly occur mechanically.

According to a preferred embodiment, said material is transparent.

According to a preferred embodiment, said material is a film.

Advantageously, said material is a transparent film.

The transparency of the synthesized films and the excellent self-healing property is of particular interest. The transparency of the film may be comparable to a translucent glass.

These self-healing transparent polymers could find applications especially in paint and coating industries, as well as in making robust polymeric materials, which would self-heal upon damage.

The invention also gives access to a broad spectrum of materials of varying flexibility by appropriate selection of the bis-isocyanate component that forms the polymer backbone.

According to one embodiment, the polymeric material of the invention is elastic.

The transparent film of the invention is according to one embodiment a soft-stretchy film and can be elongated without permanent deformation up to more than 800% of its original length. Typically it can be elongated between 200 and 400% of its original length.

A polymeric material according to the invention, when cut with a sharp scissor and the two scissored strips are overlapped on one another at the freshly cut surface, followed by a gentle pressing (duration less than 20 seconds), underwent self-healing.

Materials of the invention may be incorporated in various components of interest for mechanical, optical, electronic and/or acoustic properties.

The invention also relates to a mechanical, optical, acoustic, and/or electronic device comprising at least one material of the present invention.

### BRIEF DESCRIPTION OF THE DRAWINGS

### Figures 1 to 4 are pictures.

Figure 1: Depiction of transparency of the film, as evident from the printed text "TRANSPARENT FILM" seen through the film.
Figure 2: Mechanical scission of the transparent film with a sharp scissor.
Figure 3: Overlapping of the two scissored sections of the polymer film.
Figure 4: Depiction of an elongated self-healed polymer.

The embodiment of the invention is illustrated by following examples, which are illustrative and not to be construed as limitative of the scope of the present invention. In the examples all parts are by weight absent contrary indications, temperature is in degree Celsius (°C) and is room temperature (20-25°C) absent contrary indications, and pressure is atmospheric pressure absent contrary indications.

### Examples

### Polymers obtained from PPG-diisocyanate and different bis-hydrazides

A wide variety of polymer films were obtained of different transparency and elastic properties by polycondensation of PPG diisocyanate derivative with a series of different bis-hydrazides (namely: succinic dihydrazide, glutaric dihydrazide, pimelic dihydrazide, sebacic dihydrazide etc). However, upon reducing the carbon chain length in between the two hydrazide groups of the bis-hydrazide motif resulted in formation of sticky glues instead of elastic polymer films (such was the case with carbohydrazide, oxalyl dihydrazide).

Therefore, polymers of structure (I) (Scheme 1) wherein a is 1 and b is not 0 are preferred, notably for forming films, especially elastic films.

### Example 1 - PPG Diisocynate and adipic acid dihydrazide based polymer:

Equimolar amounts (6.54 g, 2.84 mmol) of commercially available diisocyanate derivative: Poly(propylene glycol), tolylene 2,4-diisocyanate terminated [average Mn ∼2,300 (narrow MW distribution), isocyanate ∼3.6 wt. %] and adipic acid dihydrazide (0.49 g, 2.84 mmol) was dissolved in a solvent blend of chloroform and ethanol (1:1 mixture, 40 mL each) under inert atmosphere. The reaction mixture was stirred under a nitrogen atmosphere at 25 °C for another 48 hours. Upon stirring the reaction mixture had turned from a free flowing solution at the beginning to a viscous solution mixture, in course of two days following the completion of polycondensation reaction. The resulting reaction mixture was diluted with another 40 mL of chloroform and filtered. The filtrate was evaporated in vacuum and a sticky residue was obtained. The residue was re-dissolved in minimum volume of chloroform. Followed by that the chloroform solution was poured onto a petri dish (of 50 mm diameter) made of fluoroplastic. Nitrogen gas was passed over the petri dish containing the chloroform solution of the polymer for 6 hours, whereupon almost all the chloroform had been evaporated off. The almost dried petri dish was then kept in a vacuum oven for another 12 hours at 68 °C to get rd of last traces of chloroform. After vacuum drying, the petri dish was allowed to cool down to room temperature and thin strips of polymer films as depicted in Scheme 1 was isolated after cutting with a scissor.

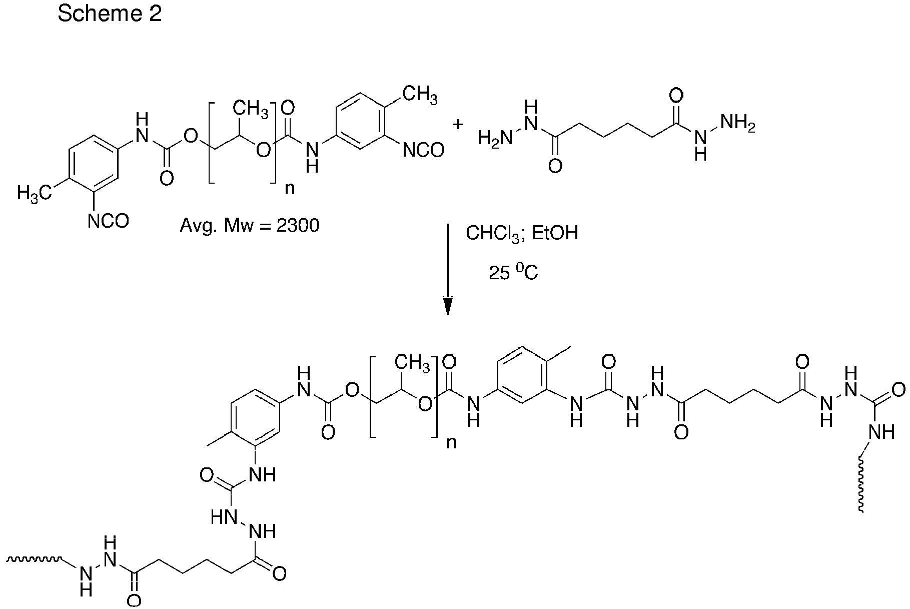

Scheme 2: Description of the reaction scheme and formation of the polymer.

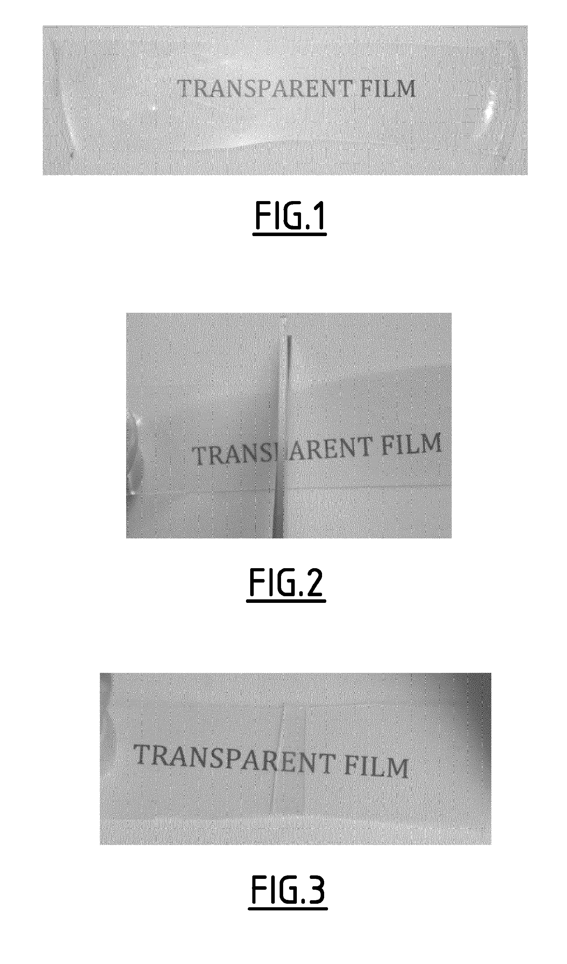

The transparent nature of the polymer film was depicted in Figure 1, as we could see the printed text "TRANSPARENT FILM" clearly on the paper when seen through the film.

The transparent polymer film was mechanically cut with a scissor (as shown in Figure 2) and the two cut parts were brought in immediate contact and gently pressed for less than 20 seconds. The overlapped polymer films were allowed to heal for 2 minutes (shown in Figure 3).

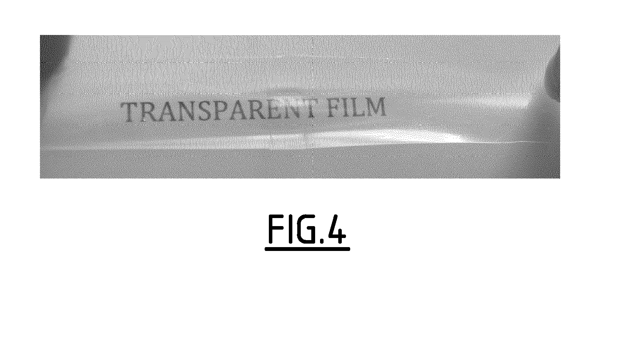

The self-healed film was then stretched and it was found to smoothly undergo stretching without rupture up to 1110% elongation (Elongation at break) (Figure 4 shows an elongated self-healed polymer). Elongation at break was measured using DIN 53504 standard method on a Zwick Z2,5 with a stretching velocity of 200mm/min. Tensile strength is of 4MPa.

Compounds of examples 2 to 8 are prepared using a protocol equivalent to the protocol of example 1 by changing the respective reactants.

Example 2. PPG Diisocynate and oxalyl dihydrazide based polymer (comparative):

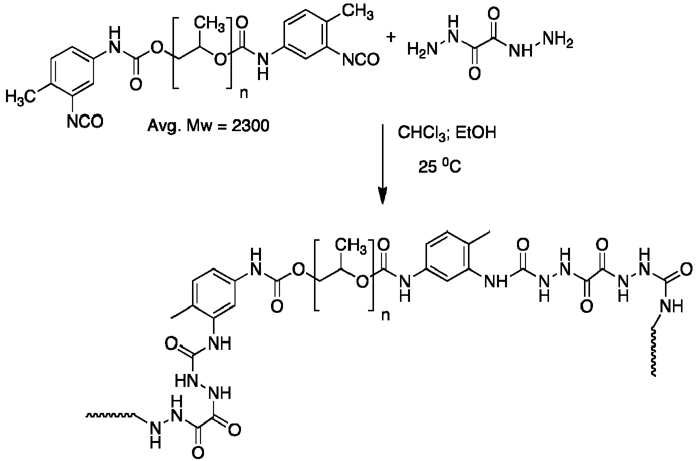

### Observation on the material properties:

It is a sticky gel like polymer and does not flow at room temperature. No film formation was observed.

Example 3 (comparative). PPG Diisocyanate derivative and terephthalic acid dihydrazide based polymer:

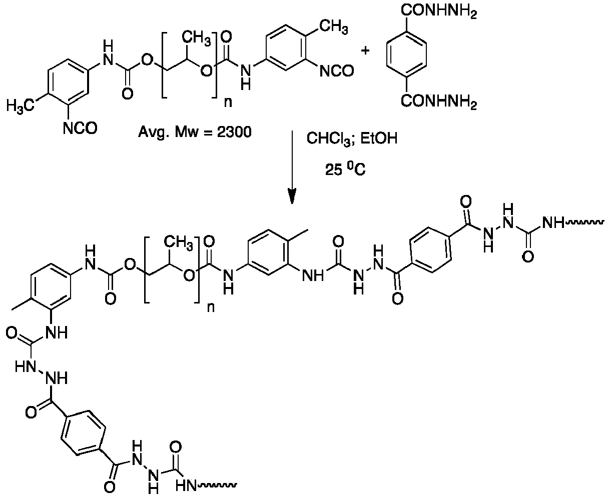

### Observation on the material properties:

It is a sticky gel like polymer and does not flow at room temperature. No film formation was observed.

Example 4. PPG Diisocyanate derivative and succinic dihydrazide based polymer:

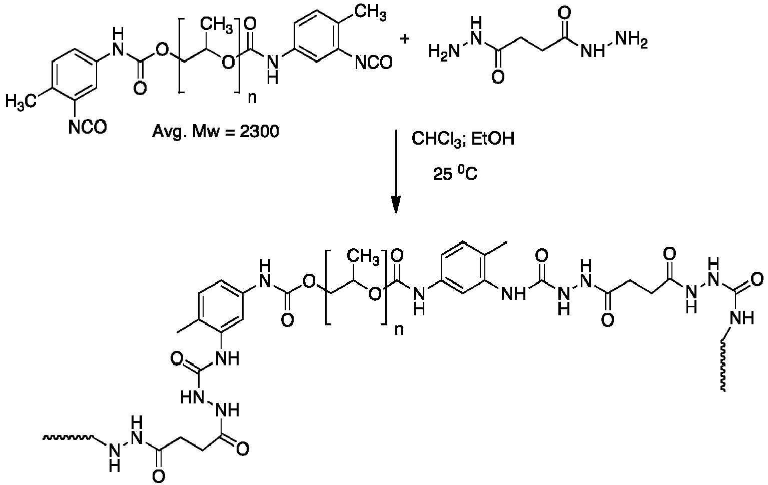

### Observation on the material properties:

It formed a slightly off white turbid polymer film. Thin film formation was not possible as it sticks to the surface.

Example 5. PPG diisocyanate and adipic acid dihydrazide based polymers (main focus of patent):

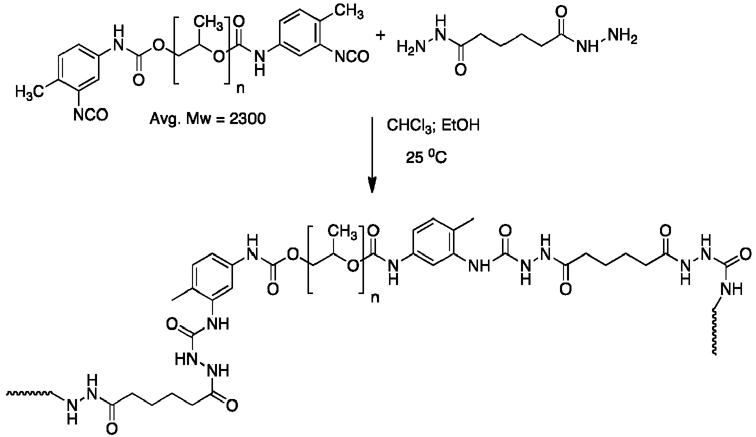

### Observation on the material properties:

It forms a transparent self-healing polymer film. Very thin film formation is also possible. This is a preferred polymer and film.

Example 6. PPG Diisocyanate derivative and Pimelic acid dihydrazide based polymer:

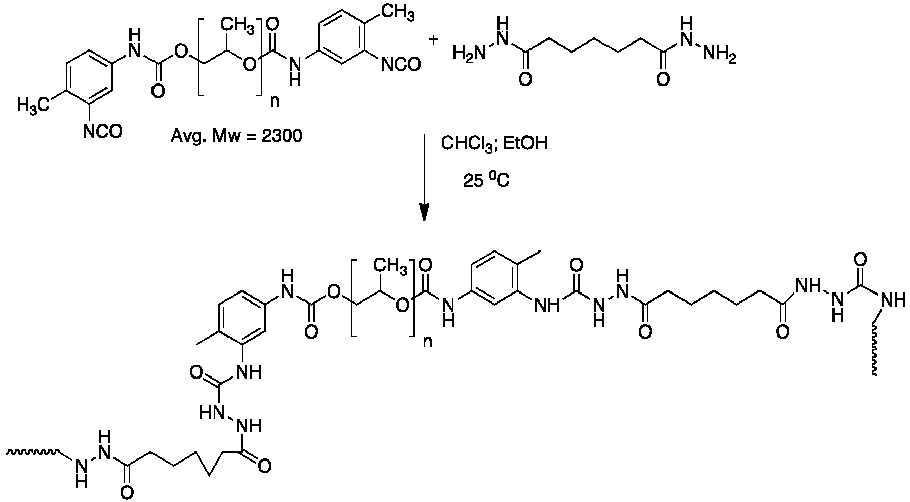

### Observation on the material properties:

It forms a transparent elastic self-healing polymer. It attaches two papers without sticking it together tightly as glue would do. It can be used as self-detachable non- sticky cello tape for papers.

Example 7. PPG Diisocyanate derivative and Sebacic acid dihydrazide based polymer:

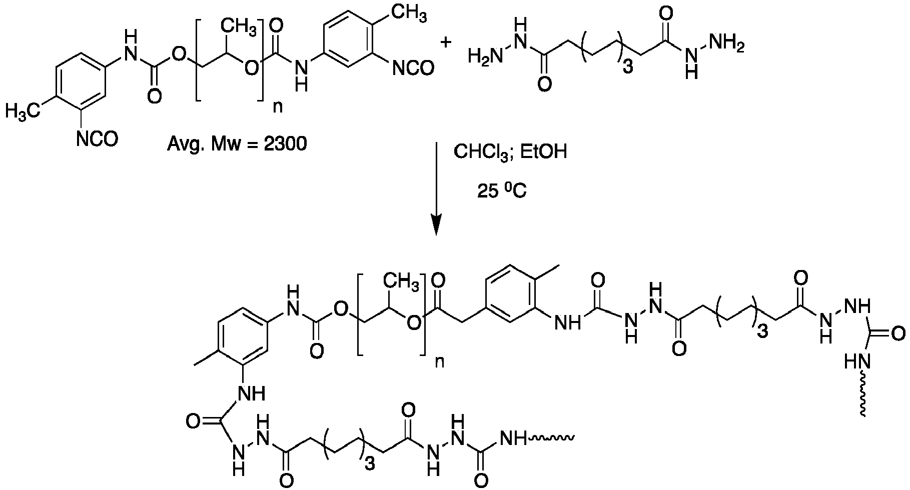

### Observation on the material properties:

It forms a transparent self-healing polymer film but little bit less transparent, not like glass.

Example 8. PPG Diisocyanate derivative and Suberic acid dihydrazide based polymer:

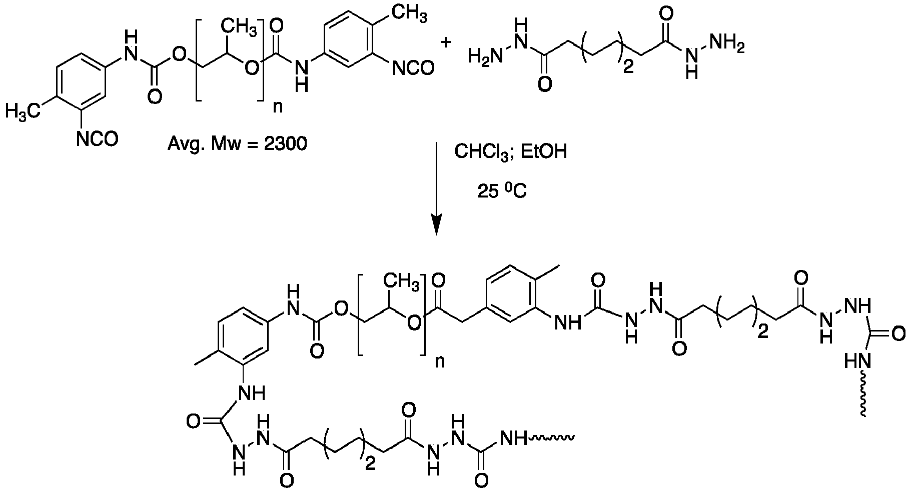

### Observation on the material properties:

It also forms a transparent (little less transparent compared to adipic acid dihydrazide) self-healing polymer film.

Polymers of Examples 1, 4-8 form self-healing films that can be stretched without rupture, after a healing time of about 5 minutes. Polymers of Example 2 and 3, which do not satisfy the structure of the polymers of the invention, did not form self-healing films that can be stretched without rupture.

## Claims

1. A compound including the following structure: 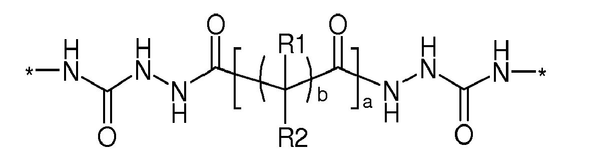 wherein R1 and R2 are each independently selected from hydrogen and a C1-C6 alkyl, for example methyl and ethyl,
wherein a is 1-10,
wherein b is a number from 1 to 20,
* represents a covalent bond to an atom or group of atoms.

2. A polymer comprising as a monomer the structure (I) below: 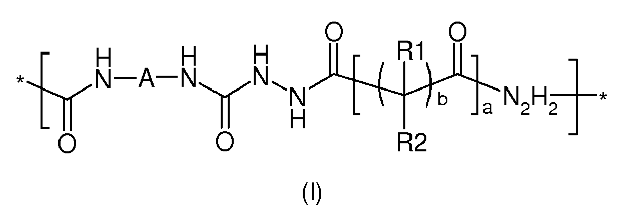 wherein A comprises a polymer,
wherein R1 and R2 are each independently selected from hydrogen and a C1-C6 alkyl, for example methyl and ethyl,
wherein a is 1-10,
wherein b is a number from 1 to 20.

3. The compound or polymer according to claim 2, wherein A comprises a polymer unit and presents a molecular weight (Mw) of from 500 to 50,000 g/mol.

4. The compound or polymer according to any one of claims 1 to 3, comprising the structure (I) below: 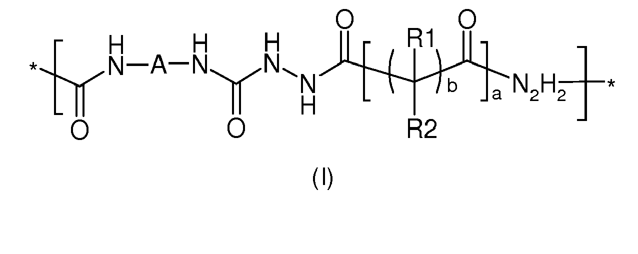 Wherein
A comprises a polymer,
R1 and R2 are each independently selected from hydrogen and a C1-C6 alkyl, for example methyl and ethyl,
a is 1 to 10,
b is a number from 1 to 20,
said polymer unit of A is a polysiloxane or a polyether,
said polyether comprises terminal phenyl groups.

5. The compound or polymer according to any one of claims 2 to 4, wherein said, wherein A comprises a polymer structure selected from: 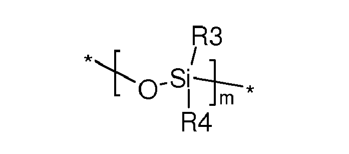 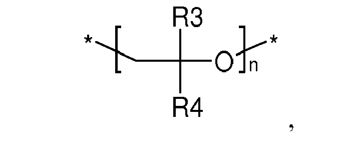 and mixture thereof,
wherein
n is a number from 5 to 200, m is a number of from 5 to 200, and
R3 and R4 are each independently hydrogen and a C1-C6 alkyl, for example methyl and ethyl.

6. The compound or polymer according to any one of claims 2 to 5, wherein said, wherein A is defined as : 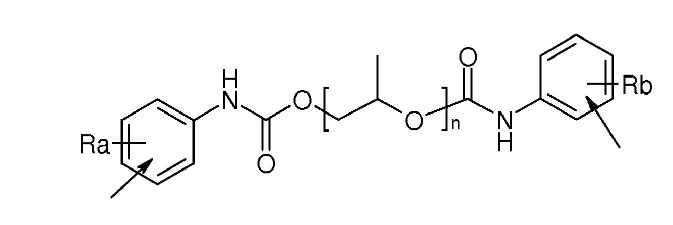 wherein arrows define the points of attachment of A into structure (I), without particular position on the phenyl group, Ra and Rb are independently 1, 2, 3 or 4 same or distinct substituents of said phenyl groups, each independently selected from the group consisting of halogen (Br, Cl, F or I), OR²², NR²³R²⁴, NHOH, NO₂, CN, CF₃, C₁-C₆ alkyl, C₂-C₆ alcenyl, C₂-C₆ alcynyl, C₆-C₁₀ aryl, C(=O)R²², CO₂R²², OC(=O)R²², C(=O)NR²³R²⁴, OC(=O)NR²³R²⁴, NR²¹C(=S)R²² or S(O)_{y}R²² ; R²² is, at each occurrence, independently selected among H, C₁-C₆ alkyl; R²³ and R²⁴ are, at each occurrence, independently selected among H, C₁-C₆ alkyl, or R²³ and R²⁴ form together a heterocyclic group having from 3 to 7 atoms.

7. The compound or polymer according to any one of claims 2 to 6, wherein said, wherein A is defined as: 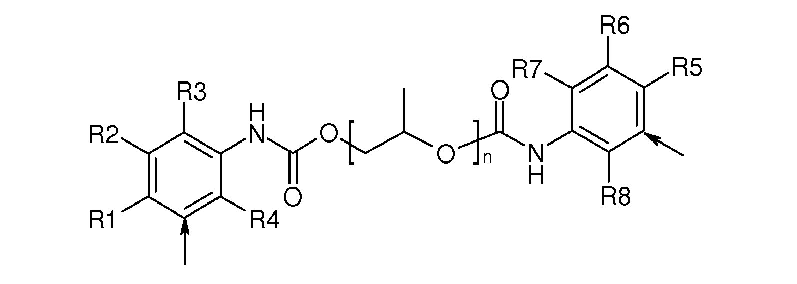 wherein R1, R2, R3, R4, R5, R6, R7, and R8 are each independently selected from the group consisting of halogen (Br, Cl, F or I), OR²², NR²³R²⁴, NHOH, NO₂ CN, CF₃, C₁-C₆ alkyl, C₂-C₆ alcenyl, C₂-C₆ alcynyl, C₆-C₁₀ aryl, C(=O)R²², CO₂R²², OC(=O)R²², C(=O)NR²³R²⁴, OC(=O)NR²³R²⁴, NR²¹C(=S)R²² or S(O)_{y}R²² ; R²² is, at each occurrence, independently selected among H, C₁-C₆ alkyl; R²³ and R²⁴ are, at each occurrence, independently selected among H, C₁-C₆ alkyl, or R²³ and R²⁴ form together a heterocyclic group having from 3 to 7 atoms
wherein arrows define the points of attachment of A into structure.

8. The compound or polymer according to any one of claims 2 to 7, wherein A is defined as: 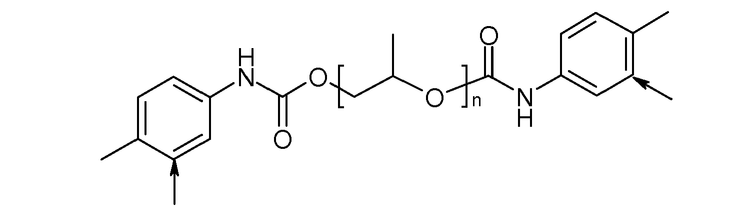 wherein arrows define the points of attachment of A into structure.

9. The compound or polymer according to any one of claims 2 to 5, wherein A is defined as: 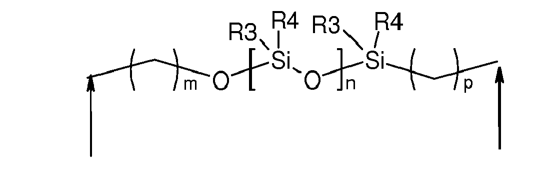 wherein
R3 and R4 are each independently hydrogen and a C1-C6 alkyl, for example methyl and ethyl,
m and p are each independently a number from 1 to 20,
n is a number from 5 to 200, arrows define the points of attachment of A into the structure.

10. A material comprising or consisting of at least one compound or polymer as defined in any one of claims 1 to 9.

11. The material of claim 10, wherein said material is transparent.

12. The material of claim 10 or 11, wherein said material is a transparent film.

13. A method for preparing a compound or polymer as defined in any one of claims 2 to 9, said method comprising the condensation of (i) at least one diisocyanate compound and (ii) at least one dihydrazide monomer according to the scheme below: 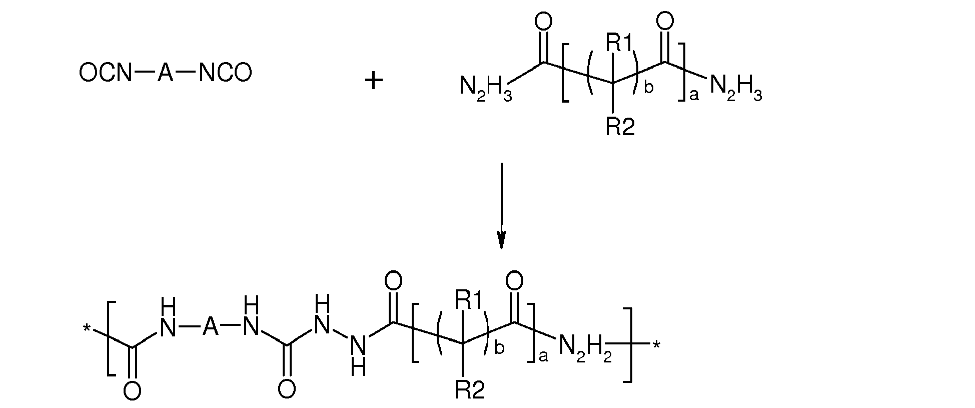 wherein R1, R2, a, b, and * are as defined in any one of claims 2 to 9.

14. The method of claim 13, wherein said method comprises condensing said diisocyanate and dihydrazide in a solution of organic solvent and drying the solution.

15. The use of at least one compound or polymer as defined in any one of claims 1 to 9, or material as defined in any one of claims 10 to 12, as self-healing agent.
